# EUROPEAN PATENT SPECIFICATION

(11) **EP 2 605 609 B1**
(45) Date of publication and mention of the grant of the patent: **27.04.2016**
(21) Application number: 11193122.6
(22) Date of filing: 12.12.2011
(51) Int. Cl.: H04W 84/18

(54) **Operating mobile devices in disaster situations**
Betreiben von Mobilgeräten in Katastrophensituationen
Fonctionnement des dispositifs mobiles dans les situations de catastrophe

(43) Date of publication of application: 19.06.2013
(73) Proprietor: AGT International GmbH, 8001 Zurich (CH)
(72) Inventor: Costantini, Diego, 64295 Darmstadt (DE); Chandra-Sekaran, Ashok-Kumar, 64295 Darmstadt (DE)
(74) Representative: Pearl Cohen Zedek Latzer Baratz UK LLP

(56) References cited:
- US-A1- 2006 176 169
- US-B1- 7 002 470
- TEKDAS O ET AL: "Using mobile robots to harvest data from sensor fields", IEEE WIRELESS COMMUNICATIONS, IEEE SERVICE CENTER, PISCATAWAY, NJ, US, vol. 16, no. 1, 1 February 2009 (2009-02-01), pages 22-28, XP011280898, ISSN: 1536-1284, DOI: 10.1109/MWC.2009.4804365
- HARRAS K A ET AL: "Inter-Regional Messenger Scheduling in Delay Tolerant Mobile Networks", WORLD OF WIRELESS, MOBILE AND MULTIMEDIA NETWORKS, 2006. WOWMOM 2006. INTERNATIONAL SYMPOSIUM ON A BUFFALO-NIAGARA FALLS, NY, USA 26-29 JUNE 2006, PISCATAWAY, NJ, USA,IEEE, 26 June 2006 (2006-06-26), pages 93-102, XP010925854, DOI: 10.1109/WOWMOM.2006.53 ISBN: 978-0-7695-2593-8
- SHAH R C ET AL: "Data MULEs: modeling a three-tier architecture for sparse sensor networks", NEW FRONTIERS IN TELECOMMUNICATIONS : 2003 IEEE INTERNATIONAL CONFERENCE ON COMMUNICATIONS ; ICC 2003 ; 11 - 15 MAY 2003, ANCHORAGE, ALASKA, USA; [IEEE INTERNATIONAL CONFERENCE ON COMMUNICATIONS], IEEE OPERATIONS CENTER, PISCATAWAY, NJ, 1 January 2003 (2003-01-01), pages 30-41, XP010642615, ISBN: 978-0-7803-7802-5

## Description

### Technical Field

The description generally relates to data communication with mobile communication devices, and more in particular, relates to data communication in extreme situations when infrastructure is not available.

### Background

Mobile communication devices, such as cell phones, mobile phones, or smart phones are ubiquitous in use. In industrialized countries, almost every adult person carries such a mobile device.

Mobile communication relies on an infrastructure. For example, the infrastructure of a cellular phone network includes base stations (BS). A base station establishes radio communication with mobile devices that are located within a cell radius of some kilometres. Multiple base stations are linked with each other so that a person in one cell can call a person in a different cell, so that theoretically there is no limitation in the communication distance.

Under normal conditions, the number of phone calls in a particular cell is below the maximum number that the base station of that cell can accept. If the maximum number is reached, a caller has to wait until a connection becomes available.

Infrastructures are frequently used to call for help in emergency situations, to call the fire brigade, ask for medical assistance, call the police etc. Some infrastructures give priority to emergency calls so that that waiting time - if any - can be reduced to a minimum. Most of emergency calls communicate the geographic location of the person in need for help. The location can be communicated verbally (city, street address; room in a building etc.) by the caller. Or, the location can be communicated automatically from the network (such a cell identification, mobile phone tracking), or from the mobile device (e.g., by Global Positioning System (GPS) units built into the devices.)

From time to time, an infrastructure or part of that infrastructure is not operating, for example, due to technical defects at the base stations. In case that cells overlap, a neighbouring base station can take over the phone traffic.

However, in extreme situations the picture changes completely. People and infrastructure in a usually limited geographic area can become victims that are affected by disasters, such as earthquakes, thunderstorms, hurricanes, tsunami waves hitting the ground, radioactive fallout, or even by terrorist attacks.

The number of persons who need help increases, some persons can no longer move or communicate (let alone using a phone); most persons try to escape the area. A higher number of persons use the infrastructure to place emergency calls, so that the infrastructure gets overloaded. The infrastructure can even be physically destroyed.

In other words, such disaster situations are characterized by emergency situations for a high number of persons in combination with the non-availability of the communication infrastructure.

Further, rescue personnel (including rescue management by state authorities) needs accurate information regarding persons who need help. But with a broken infrastructure the information is difficult to obtain.
IEEE WIRELESS COMMUNICATIONS, 20090201 IEEE SERVICE CENTER, PISCATAWAY, NJ, US, vol. 16, no.1, 1 February 2009, pages 22-28, O. Tekdos et al., ISSN 1536-1284 discloses the use of mobile robots to harvest data from sensor fields. US2006176169 discloses a system and method for facilitating measurement of environmental conditions such as might be used in emergencies or other situational awareness applications. The method includes dispersing several networked nodes in a region, the nodes being coupled to one or more sensors, and then employing the one or more sensors to sense one or more environmental conditions and providing sensed data in response thereto.

### Summary

In disaster situations, mobile devices can be operated as data mules to communicate rescue-relevant information. Ad-hoc connections that bypass broken infrastructures can be set up. Such connections consider device mobility and data transmission success probability.

Mobile devices comprise components that are typical for a computer, such as processor and memory. A modern mobile device is further equipped with auxiliary features or components that are not directly needed for the communication with the network. For example, the device can have a movement sensor (e.g., accelerometer), a location sensor (or position sensor, e.g., GPS module), a short distance radio module (e.g., a WLAN module up to 100 metres, in some cases further reach), and a digital camera (to take pictures or short movies). The microphone can also be used to take voice memos. Some devices even can monitor the physical condition of its users (e.g., pulse). Data storage (e.g., flash memory) is available as well.

In case of emergency for the user, the device can use these features to collect and provide rescue-relevant information. Such information assists in helping the user and can comprise: the location of the user (e.g., a location with xy-coordinates, or identification of a WLAN), the physical condition of the user (e.g., pulse, blood pressure), personal data (e.g. blood type), and environmental data (e.g., temperature). Such rescue-relevant information could be communicated through the infrastructure.

If the emergency falls together with an extreme situation, that means emergency for other persons as well in combination with infrastructure non-availability, the device uses some more of its features. The device may use the movement sensor to obtain a movement state of its user (e.g., moving, or non-moving, complementary to each other), or the short distance radio module to identify a device with a moving user. Assuming that the user is hurt by the disaster and cannot move anymore, the user's device can transmit the rescue-relevant information to the device of a moving user. The moving user carries the information in his/her device ("data mule") so that the information can be handed over to persons who can help (responders, rescuers, medicals etc.).

Looking from a networking perspective at multiple devices, with non-moving and moving devices, the devices can communicate in an opportunistic network (ad-hoc network).

In other words, the infrastructure (that normally allows communication without distance limitation and delay limitation) is backed up with a communication protocol that is a combination of ad-hoc networking over short distances and physically carrying rescue-relevant information. Other aspects address the potentially high number of data sets (from many users), for example, by including the movement state into initial notifications, by selecting pairs of devices with complementary movement state (dual state; instead of, for example, communication between all devices), by selecting the devices according to success probability (to hand over the information) etc.

There is provided in the following a computer-implemented method for operating a mobile device, comprising: observing the physical movement of the mobile device to classify the mobile device to have an observed movement state relating to a change in the location of the mobile device over time; notifying the observed movement to other mobile devices; in response to the notification, receiving location information from at least one other mobile device that has a movement state that is complementary to the observed movement state; and upon arrival of the mobile device in a destination area, handing over the location information to a recipient; wherein the mobile device is configured to operate in a communication network and the method is triggered by detecting that the operation of the communication network exceeds a threshold condition and wherein said notifying and receiving are performed by communication channels that are independent from the communication network.

The threshold condition can include that the number of mobile devices attempting to connect to a base station exceeds a maximum number of devices that can be allocated to this base station.

In an implementation, the observed movement state is a directional movement with a speed above a predefined threshold and the complementary movement state is a movement with a speed below the predefined threshold.

In an implementation, notifying and receiving are performed by communication channels such as a wireless local area network (WLAN, IEEE 802.11), a device-to-device Bluetooth connection, or infrared communication.

In an implementation, notifying can be performed by broadcasting, unicasting, or multicasting. A particular other device having a movement state that is complementary to the observed movement state can be selected. In that case, selecting can be performed according to the probability of the device with the observed movement state to hand over the location information at the destination area. The probability can be derived from a speed of the device with the observed movement state, a radio signal strength in communication activities between devices, or a battery status of the device with the observed movement state.

In an implementation, the location information is accompanied by further information relating to the device with the complementary movement state. The further information can be classified into priority categories. Higher priority has preference in receiving information and handing over information.

In a different aspect, a computer-program product is provided that - when loaded into a memory of a mobile computer and being executed by at least one processor of the computer - performs the steps of the method described above.

In a different aspect, there is provided a mobile device comprising: an observer module configured to observe the physical movement of the mobile device to classify the mobile device to have an observed movement state that is a first movement state or a complementary second movement state, the first movement state relating to a change of the location of the mobile device over time; a notifier module configured to notify the observed movement state to other mobile devices; a selector module configured to select at least one other device having a movement state that is complementary to the observed movement state; a sender module configured to, in case the other mobile device has the second movement state, send location information to the other mobile device; a receiver module configured to, in case the mobile device has the first movement state, receive location information from the other mobile device; and a hand-over module configured to hand over the location information to a recipient after the mobile device has been physically transported to a destination area.

In an implementation of the mobile device, the modules are implemented by a computer-processor that accesses built-in components of the mobile device, the computer-processor accesses an accelerometer to provide the function of the observer module, accesses built-in device-to-device radio interfaces to provide the function of the sender and receiver modules. The built-in device-to-device radio interface can be a WLAN-interface, or a Bluetooth interface.

### Brief Description of the Drawings

FIGS. 1A and 1 B are simplified maps that illustrate persons using a communication network infrastructure with mobile devices before a breakdown (FIG. 1 A) and after a partial breakdown (FIG. 1 B) of the infrastructure;
FIG. 2 are simplified maps of a geographic area in that the communication network infrastructure has broken down, to illustrate the activities of the persons and their mobile devices at consecutive points in time;
FIGS. 3A and 3B are block diagrams of mobile devices that communicate by ad-hoc connections to bypass the broken infrastructure;
FIG. 4 is a flow chart of a method for operating the mobile devices;
FIG. 5 is a close-up view of mobile devices to illustrate a method activity to classify the devices into devices with complimentary movement state;
FIG. 6 is a collection of block diagrams of mobile devices to illustrate implementations of a method activity to notify the movement state from a device in a centre to other devices;
FIG. 7 is a portion of the geographic area with devices to illustrate a method activity to select devices for communicating data between the devices; and
FIG. 8 is a block diagram of devices to illustrate a method activity to hand over data from the devices to a data destination.

### Detailed Description

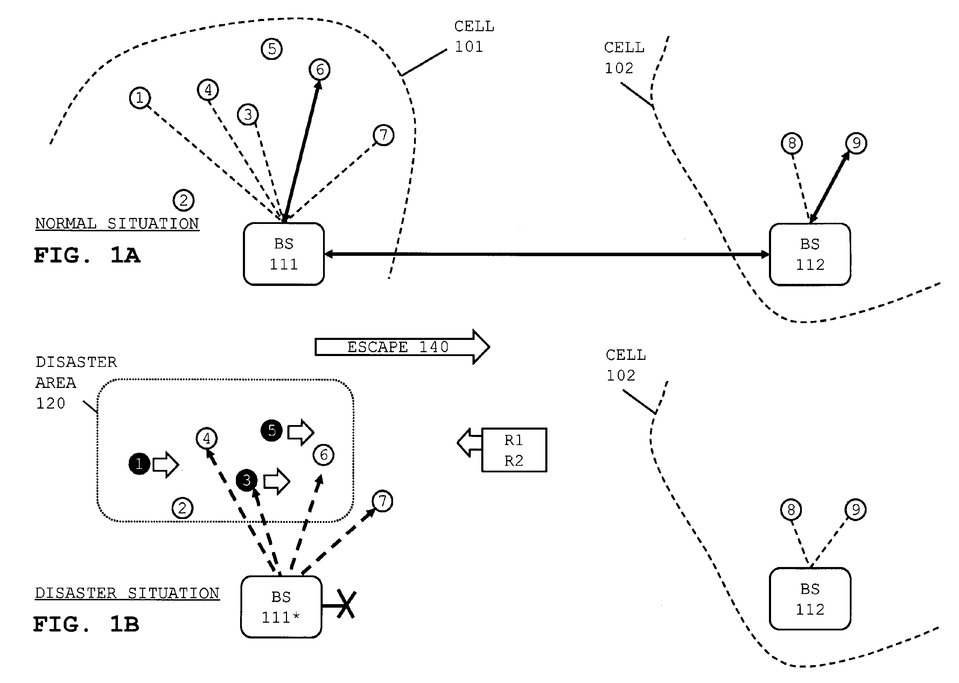

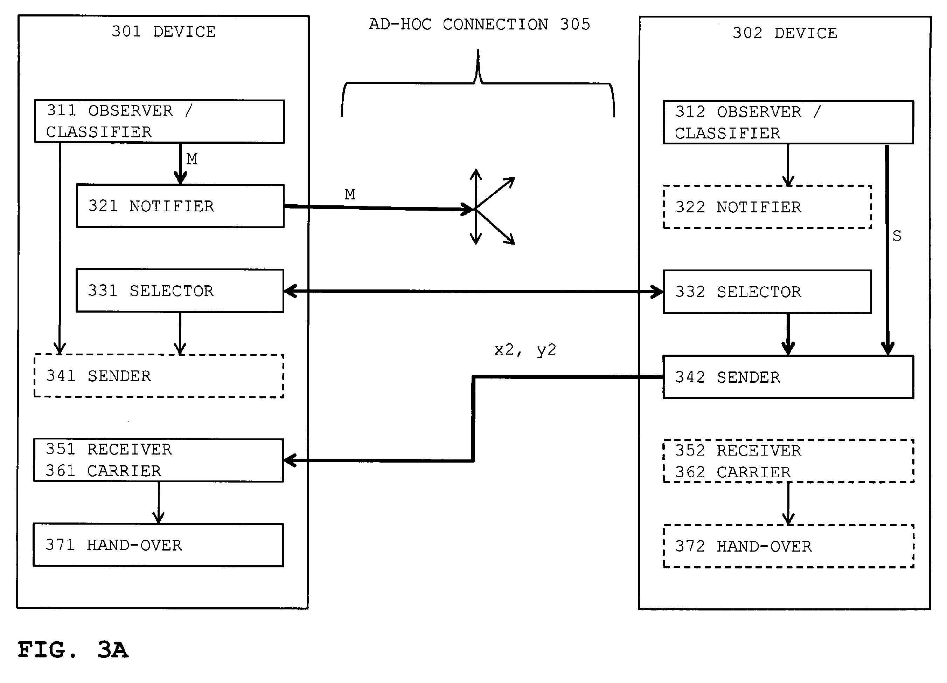

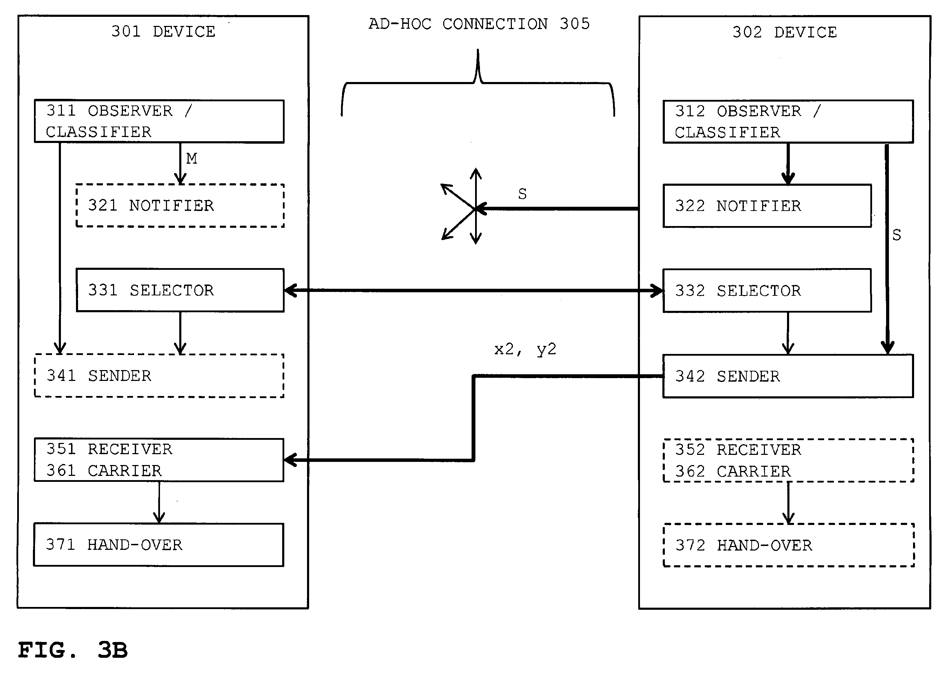

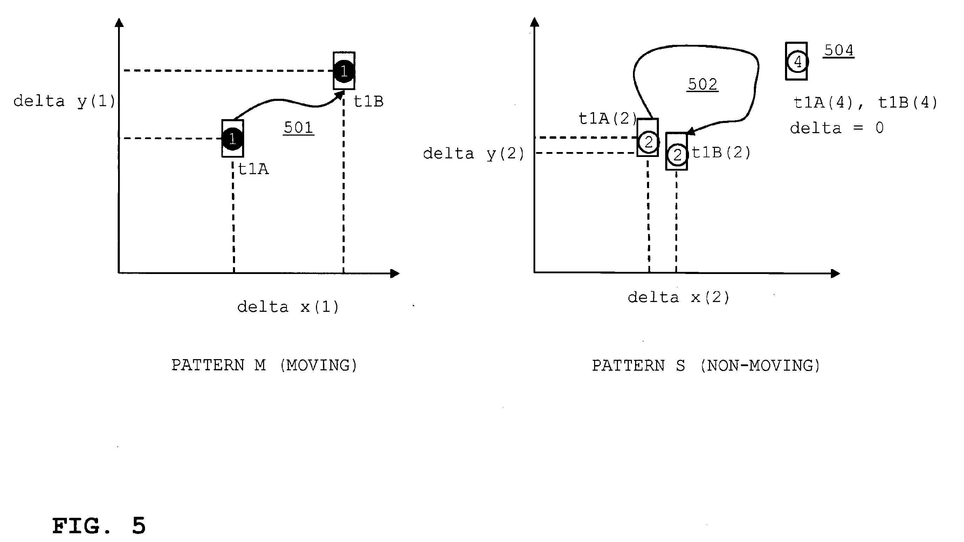

The description starts with an overview and zooms in by explaining an illustrative scenario (FIGS. 1-2). It continues with explaining modules of the devices and method activities of the modules (FIGS. 3-4), looks at options for performing the method (FIGS. 5-8), and closes with a discussion of further aspects.

The scenario assumes that a disaster occurred. The duration of the disaster does not matter and is neglected. The term "after the disaster" includes that the disaster can be on-going. For example, an earthquake has a very short duration (measured in seconds); a hurricane has a relatively long duration (measured in hours). Disasters can develop gradually, with different stages in severity.

References to a disaster are convenient for explanation, and to give an illustration to the method and the devices in view of its potential use, using the method and the devices is however not limited to "disasters".

The figures illustrate persons by circles, and illustrate mobile devices by rectangles. Since the persons carry the devices with them, figures and description sometimes use the same reference numbers 1 to 9 for both. For example, person 1 carries device 1 so that device is moving with person 1.

FIGS. 1A and 1B are simplified maps that illustrate persons (1-9) using a communication network infrastructure 111/112/101/102 with mobile devices before a breakdown (above in FIG. 1A), and after a partial breakdown (below in, FIG. 1 B) of the infrastructure.

FIG. 1A illustrates a normal situation for the operation of a communication network infrastructure. A cellular network (e.g., GSM) has bases stations (BS) 111, 112 with cells 101, 102. The figure shows a first part of the network (101, 111) on the left side, and shows a second part of the network (102, 112) on the right side. Both base stations 111, 112 are interconnected.

Persons 1-7 (circle symbols) carry mobile devices (not shown) in cell 101 (left), and persons 8 and 9 carry mobile devices in cell 102 (right). As illustrated by a bold line, persons 6 and 9 communicate via the network, for example, they phone each other, or the exchange a text message (SMS, short message service). As illustrated by dashed lines to the base stations, persons 1, 3, 4, 7 and 8 have the devices switched on, to receive phone calls at any time, from anywhere. Persons 2 and 5 have the devices switched off, so they can not be called.

FIG. 1 B illustrates a disaster situation on the left side. Disaster area 120 is shown around persons 1 to 6 just to illustrate that they might be in an emergency situation. It is not necessary to exactly identify such disaster areas. In case of large-scale natural disaster, for example, earthquakes or hurricanes, areas in the centre are more affected than surrounding areas. For example, in case of hurricanes, disaster areas change over time. Or, for example, in case of fires, areas might get larger as more and more fires spread out.

Persons 3, 4, and 6 inside disaster area 120, and person 7 (outside) all try to call. BS 111* is blocked due to overload. There is no communication via that BS. (The description and the figure uses a low number of callers for simplicity).

On the right side of the figure, BS 112 is illustrated as operating normally. The network has a normal operating portion (BS 112, cell 102) and a non-available portion (BS 111*). In other words, the operation of communication network (BS 111, 112, cells 101, 102) is partially interrupted (or broken down, in BS 111*, cell 101 disappeared), and partially normal (BS 112, cell 102).

There might be other reasons for the failure of BS 111*, it might have been physically destroyed. From a timing perspective, BS 111* is potentially not available for a couple of hours (or days), the time it takes to rescue the persons who are in the disaster zone.

As illustrated in FIG. 1 B, inside disaster area 120, persons 1, 3 and 5 are mobile (black circle, arrows), they can move. Inside disaster area 120 persons 2, 4, 6 can not move. They might be injured.

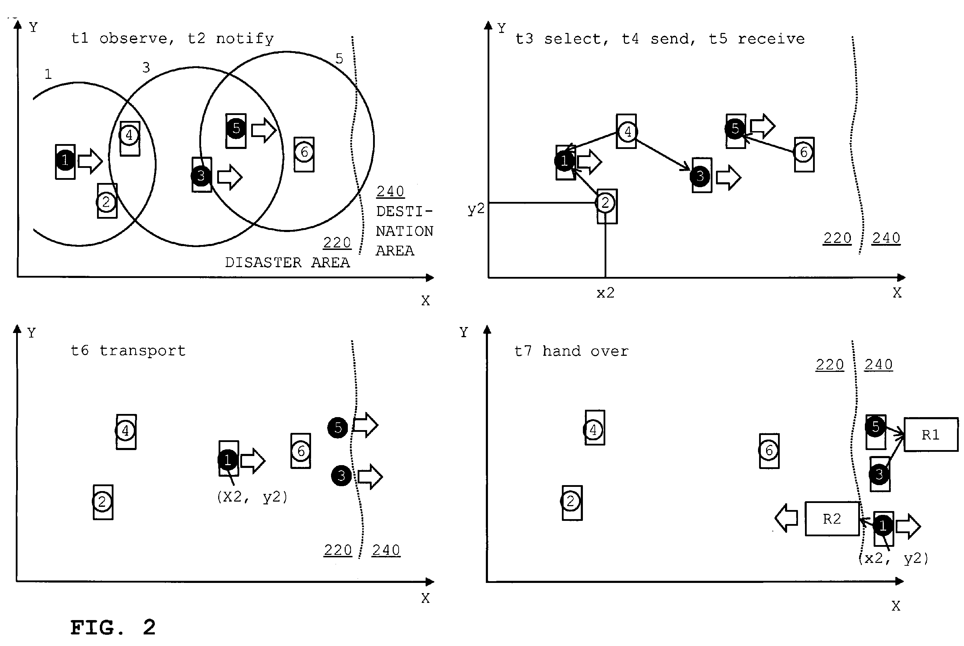

Moving persons 1, 3 and 5 move in escape direction 140 (here: left to right), or they might move in a different direction, or due to confusion move around without any direction. More details for the behaviour of persons 1-6 (and the mobile devices) are explained in connection with FIG. 2 that shows disaster area 120 at different points of time.

Rescue persons R1, R2 go to the disaster area (in a direction that may be against the escape direction).

The figures are simplified. For example, obstacles etc. are not shown. Escape direction 140 is symbolic from left to right. In reality, the escape (and the rescue) of the persons is likely to go via more complicated paths, for example, via the few remaining streets in am earthquake-destroyed city.

As indicated by the dashed lines between mobile devices and BS 111*, persons 3, 4, 6 and 7 try to use the network. But they cannot use it because - as mentioned - the network is partially not operating. It does not matter if the person who tries to call is moving or not.

Non-moving persons 2, 4 and 6 hand over location data to moving persons 1, 3, 5. The moving persons carry the data and hand it over to the rescue persons R1, R2. It is possible that persons are involved in receiving and forwarding data, but - as it will be explained in the following - data is handled automatically by the devices. Some of the devices act as "data mules". The description of the scenario remains focused on the disaster area and continues with a closer look at the devices and the persons.

FIG. 2 are simplified maps of the geographic area (yx-coordinates, disaster area) in that the communication network infrastructure has broken down, to illustrate the activities of the persons (circles 1-9) and their mobile devices (rectangles 1-9) at consecutive points in time.

Time points t1 to t8 are introduced for explanation purposes, and the scenario assumes a sequence of events in that order. However, activities can be repeated, and some devices can perform activities that belong to different time points.

The maps in FIG. 2 illustrate the persons (small circle symbols) in disaster area 220 (cf. FIG. 1 B), and the communication between their devices (rectangle symbols). As illustrated by a dotted line, disaster area 220 ends in destination area 240. There are no clear borders between both areas. Destination area 240 just symbolizes that are devices and/or persons available who can receive the carried information.

The communication between the mobile devices is important. An interaction with the persons is not required. (Persons might not be able to do so).

For simplicity, it is assumed that every person carries one device, so the same reference numbers 1-9 will be used for a person (small circle) and for a device (rectangle). The movement of the person translates to the movement of the device.

The devices have entered an alert mode (or disaster mode) that is applicable for "all" devices. In the example, devices 1, 2, 3, 4, 5 and 6 are in that mode. The disaster mode can be triggered automatically (e.g., detecting network failure), or manually (e.g., by user interaction). Optionally, the disaster mode can include activating devices that had been switched off.

Once in alert mode, at t1, the devices are classified into devices with moving persons (black circle, "moving devices" 1, 3, 5) and devices with non-moving persons (white circle, "non-moving devices"). Or in other words, devices 1, 3 and 5 are in the state "moving" (or M), and devices 2, 4, and 6 are in the "non-moving" state (or "static" state S). There might be some variations; people are not only static or moving. Moving person can be walking or running, or driving, but this overview scenario uses a simple yes/no differentiation. More details for the classification are explained in connection with FIG. 5.

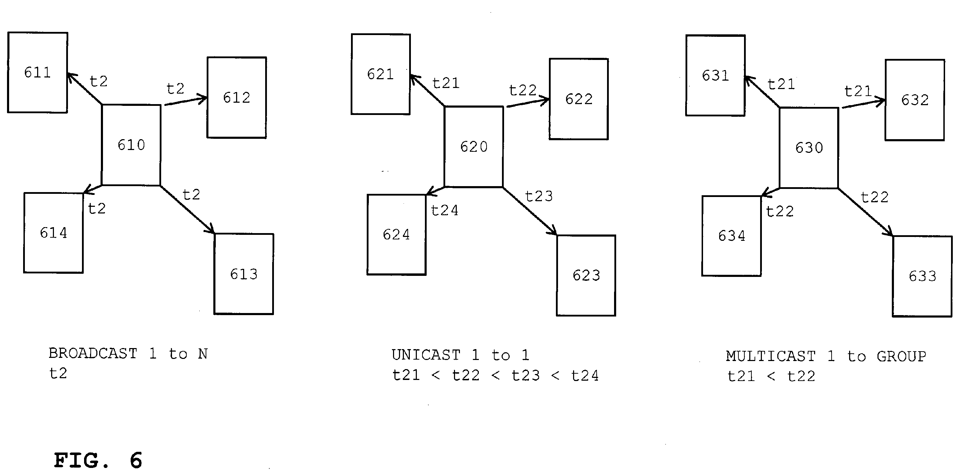

At t2, the moving devices 1, 3, 5 send out short-range notification signals indicating, for example, "moving device". From here, the devices communicate via their short distance radio modules (e.g., WLAN), to form an ad-hoc network. The range of the signals (notification range, radius of the large circles) is usually limited by the transmission power and the reception sensitivity of the devices. A radius of about 40 metres can be assumed for WLAN. In the scenario of FIG. 2, the moving devices notify the other devices by broadcasting. Device 1 has a range that reaches non-moving devices 2 and 4 (inside the circle); device 3 has a range that reaches non-moving device 4 as well); and device 5 reaches non-moving device 6. More details for the notifications are explained in connection with FIG. 6.

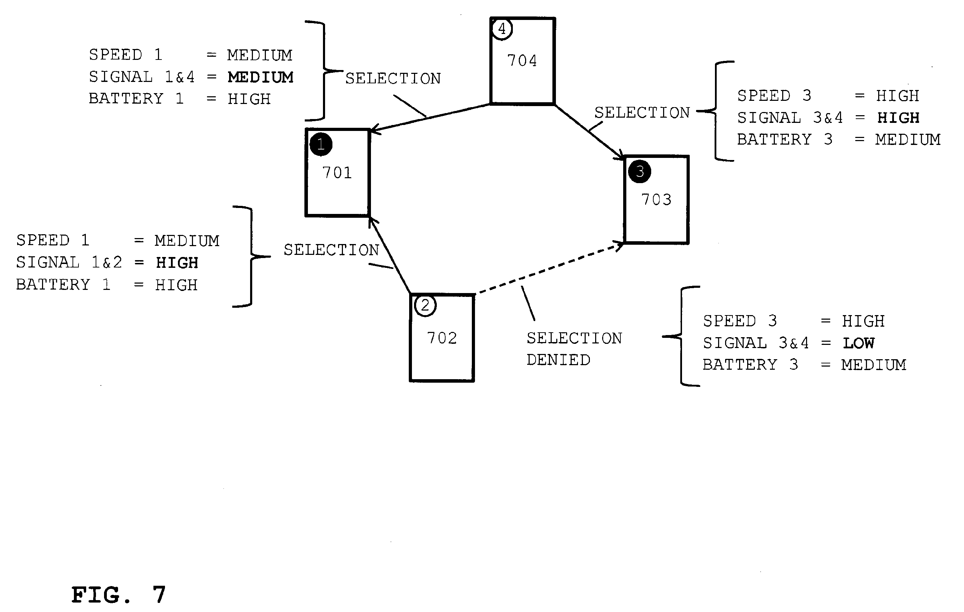

At t3, the devices select each other for exchanging communication. There are pairs of devices, with a moving device and a non-moving device. Selection helps to identify the most suitable device for data transmission and radio traffic in that ad-hoc network. More details for the selection are explained in connection with FIG. 7.

At t4, the non-moving devices (having received the notifications, and having performed the selection), communicate rescue-related data (e.g., location) to the moving devices. In the example, this is shown for device 2, with location coordinates x2, y2 that are being sent to device 1. Also, device 4 sends its location data to devices 1 and 3; device sends its location data to device 6.

At t5, simultaneously with t4, the moving devices receive the data.

At t6, the moving devices, as they are carried by the persons moving in escape direction, carry the data (e.g., device 1 carries data that belongs to person 2). The same applies for devices 3 (data from 4) and 5 (data from 6). The figures illustrates this: devices are 2, 4 and 6 are still in disaster area 220, but devices 1, 3 and 5 are approaching destination area 240.

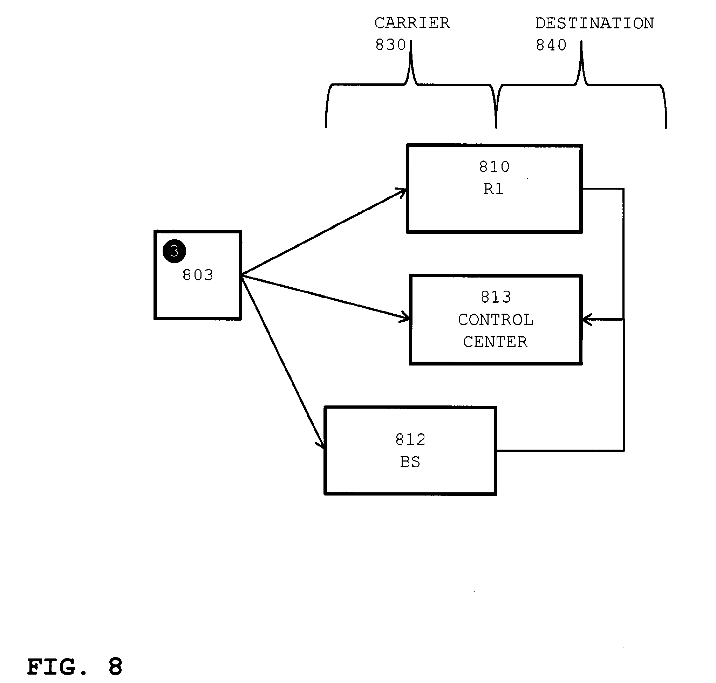

At t7, devices having reached destination area 240, devices 1, 3 and 5 hand over data to recipients, for example to rescue persons. In the example, R2 (rescue person) obtains location data of person 2. R2 can go out (against the escape direction) to help person 2. More details for the hand-over will be explained in connection with FIG. 8.

FIGS. 3A and 3B are block diagrams of mobile devices 301/302 that communicate by ad-hoc connections 305 to bypass the broken infrastructure.

The figures illustrate 2 devices, device 301 on the left side and device 302 on the right side. Both devices comprise modules with identical functionality. According to a movement state, the devices will turn into different operation modes. Devices with different operation modes communicate with each other. The description concentrates on device 301. As the case may be, device 301 (and device 302) can operate in both modes, the illustration assumes that device 301 operates according to the first movement state (M), and device 302 operates according to the second movement state (S).

Depending on the operation mode, some modules may not be used, such module are illustrated by dashed blocks. For example, the device 301 has sender module 341, but does not use it. Module 341 is shown dashed. Device 302 has a corresponding sender module 342 and uses it, module 342 is shown with plain lines. Arrows between the modules in the devices and between the devices indicate data transfer.

Communication device 301/302 comprises observer module 311/312, notifier module 321/322, selector module 331/332, sender module 341/342, receiver module 351/352, carrier 361/362 and hand-over module 371/372.

Observer module 311 observes the physical movement of the mobile device 301 to classify mobile device 301 to have an observed movement state that is a first movement state (M) or a complementary second movement state (S). The movement state (e.g., M) relates to a change of the location (delta x, delta y) of mobile device 301/302 over time (e.g., t1A, t1B, cf. FIG. 5). In the example of FIGS. 3AB, device 301 has movement state M, and device 302 has movement state S.

Notifier module 321/322 notifies the observed movement state (M, or S) to other mobile devices. In the example of FIG. 3A, notifier module 321 (of device 301) sends a notification with state M to device 302; in the example of FIG. 3B, notify module 322 (of device 302) sends a notification with state S to device 301.

Selector module 331/342 selects at least one other device that has a movement state that is complementary to the observed movement state. In the example, selector module 331 of device 301 (state M) selects device 302 (state S). As indicate by a bi-directional arrow, the selection can also be performed in the other direction: selector 332 of device 302 (state S) can also select device 301 (state M).

Sender module 341/342 is activated in case the mobile device has the second movement state (S), in the example, sender module 342 of device 302 is activated; sender module 341 is not activated (dashed). The activated sender module (here: 342) sends location information (x2, y2) to the other device (here device 301).

Receiver module 351/352 is activated in case the mobile device (301) has the first movement state (M), receiver module 351/352 receives location information from the other device. In the example, receiver module 351 of device 301 receives location information (x2, y2) from device 302.

Receiver module 351/352 is coupled to carrier module 361/362. For example, the carrier module is implemented by a portion of computer memory. Non-volatile memory, implemented for example by flash-memory, may be advantageous because the received location information can still be read out even if the power of the device fails. It is also possible to implement the carrier modules by physical carriers that are separate from the device (e.g., printing to paper), or that can be separated from the device (e.g., memory cards, such as a well-know SD-cards). In the example, receiver module 351 of device 301 is activated, while receiver module 372 of device 302 is not activated.

Hand-over module 371/372 hands over the location information (e.g., x2,y2) to a recipient (R1, R2, 812, 813, 810 in FIG. 8) after the device has been physically transported to a destination area (240 in FIG. 2, 840 in FIG. 8). Module 371/372 could be implemented by a variety of ways, for example, by a short range connection between device 301/302 and a recipient person (with or without device). For example, hand-over could be accomplished by short range data transfer connection, or even by presenting the location information on a screen (so that the recipient person can read it).

The description of FIG. 3AB closes with implementation details. The modules can be implemented by a computer-processor (that is part of device 301/302) that accesses built-in components of the device. For example, the computer-processor accesses an accelerometer to provide the function of observer module 311/312, accesses a built-in device-to-device radio interface to provide the function of the sender modules 341/342 and receiver modules 351/352. The built-in device-to-device radio interface is, for example, a WLAN-interface, or a Bluetooth interface. Hand-over module 371/372 can be implemented by the same hardware (as sender/receiver) but due to the expected hand-over conditions, there are more options: For example, the mentioned short range connection can also include infrared interfaces. Also, hand-over module 371/372 can be implemented by establishing a connection via a network infrastructure that is available at the destination (e.g., using BS 112). Further details are explained in connection with FIG. 8.

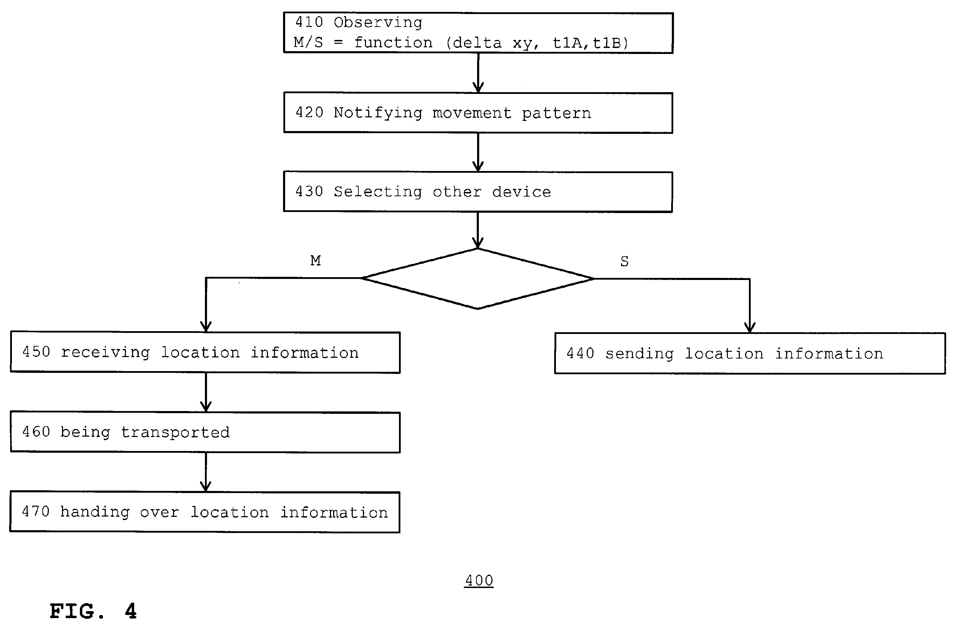

FIG. 4 is a flow chart of method 400 for operating the mobile devices. Method 400 is a computer-implemented method for operating mobile device 301/302 with the following activities (or steps): observing 410, notifying 420, selecting 430, sending 440, receiving 450, transporting 460 and handing over 470. Not all steps are performed by the same device. Depending on the movement state, some steps are performed by device 301, some by device 302.

The explanation of the method can be focused on a single device that has the first movement state (e.g., device 301 that is moving), it can be focused on a single device that is either moving or non-moving (e.g., 301 or 302), or it can be focused on a plurality of devices. The description is now focused on a single device.

In observing 410, the physical movement of mobile device 301 is observed to classify mobile device 301 to have an observed movement state (M). In notifying 420, the observed movement state (M) is notified to other mobile devices. In receiving 450 - performed in response to the notification - location information (x2, y2) is received from at least one other mobile device that has a movement state (S) complementary to the observed movement state (M). Upon arrival of mobile device 301 in a destination area (240, 840, after being transported to that area), the location information (x2, y2) is handed over 470 to a recipient (R1, R2, 812, 813, 810).

Method 400 can be triggered by detecting that the operation of the communication network 111*/101 exceeds a threshold condition so that notifying 420 and receiving 450 are performed by communication channels 305 that are independent from the communication network 111/101. The threshold condition includes that the number of mobile devices attempting to connect to a base station (e.g., BS 111) exceeds a maximum number of devices that can be allocated to this base station.

The observed movement state (M) can be a directional movement with a speed above a predefined threshold (delta x, delta y, t1 A, t1 B) and the complementary movement state (S) is a movement with a speed below the predefined threshold (delta x, delta y, t1A, t1B).

Notifying 420 and receiving 450 can be performed by communication channels selected from the group of wireless local area network (WLAN, IEEE 802.11), device-to-device Bluetooth connection, and infrared communication. Notifying 420 can be broadcasting, unicasting, and multicasting.

In selecting 430, a particular other device 302 can be selected (that has a movement state complementary to the observed movement state). It is advantageous to perform selecting 430 according to the probability of the device with the observed movement state to hand over 470 the location information (x2, y2) at the destination area 240, 840. The probability can be derived from (i) a speed of the device with the observed movement state, (ii) a radio signal strength in communication activities between devices, or (iii) a battery status of the device with the observed movement state. The location information (x2, y2) can be accompanied by further information relating to the device with the complementary movement state, the further information can be classified in priority categories. Higher priority has preference in receiving 450 and handing over 470.

The description is now focused on a single device that is either moving or non-moving. In observing 410, the physical movement of the mobile device 301/302 is observed to classify the mobile device to have an observed movement state that is a first movement state (M) or a complementary second movement state (S). The movement state relates to a change of the location (delta x, delta y) of the mobile device over time (cf. FIG. 5). For example, device 301 has observed movement state M, and device 302 has the observed movement state S. For example, the first movement state (M) can be a directional movement with a speed above a predefined threshold (delta x, delta y, t1A, t1B) and the second movement state (S) can be a movement with a speed below the predefined threshold (delta x, delta y, t1A, t1 B). The second movement state (S) can also be that the device is not moving at all.

In notifying 420, the observed movement state is communicated to other mobile devices (e.g., to device 302). Notifying 420 the observed movement state to other mobile devices can start with the devices having the first movement state. Notifying 420 can be performed, for example, by broadcasting, unicasting, or multicasting (cf. FIG. 6).

In selecting 430, at least one other device is selected that has a movement state that is complementary to the observed movement state. In the example scenario, devices 1 und 2, 3 and 4, 5 and 6 have complementary movement states. Selecting 430 can be performed according to the probability of the device with the first movement state to hand over the location information (x2, y2) at the destination area. The probability can be derived from a speed of the device with the first movement state, a radio signal strength in the send and receive activities, or a battery status of the device with the first movement state (cf. FIG. 7).

In case the mobile device has the second movement state, the device sends 440 location information (e.g., x2, y2) to the other device. The location information (x2, y2, or position information) can be accompanied by further information relating to the device with the second movement state. The further information can be classified in priority categories. Higher priority can have preference in sending. For example, the location of a person in need for help has higher priority than his/her name. The physical condition of a disaster victim (e.g., type of injury) is important for coordinating rescue efforts and has priority over, for example, a type of mobile device that he/she uses.

In case the mobile device has the first movement state, the device receives 450 location information (e.g., x2, y2) from the other device and - after being physically transported 460 to a destination area - the device hands over 470 the location information to a recipient. Receiving 450 and handing over 470 can be prioritised as well.

Method 400 can be triggered by detecting that the operation of the communication network (e.g., BS 111*/ cell 101) exceeds a threshold condition so that notifying 420, sending 440, selecting 430 and receiving 450 are performed by communication channels 305 that are independent from the communication network. The steps can be performed by communication channels that are, for example, a wireless local area network (WLAN, IEEE 802.11), a device-to-device Bluetooth connection, or an infrared communication.

In the threshold condition, for example, the number of mobile devices attempting to connect to a base station (cf. BS 111) exceeds a maximum number of devices that can be allocated to this base station. Or, the base station can stop operating.

The description is now focused on a plurality of devices. Method 400 for operating a plurality of mobile devices (e.g., 1, 2, 3, 4, 5, 6) in a communication network (e.g., 111/101; 112/102) comprises the following activities:

The physical movement of the mobile devices (1, 2, 3, 4, 5, 6) is being observed 410 to classify the devices into devices (1, 3, 5) with a first movement state (e.g. M moving) and devices (2, 4, 5) with a second movement state (e.g., S static, non-moving). Both movement states are complementary to each other.

Notifications between the devices are being exchanged 420, including the movement states.

Devices with complementary movement states (2(S)-1 (M), 4(S)-1 (M), 4(S)-3(M), 5(S)-6(M)) are selected 430. Between selected devices, location information (x2, y2) of the devices (2, 4, 6) with the second movement state (S) is sent 440 to the devices with the first movement state (1, 3, 5). The information is received by the devices (1,3,5) with the first movement state (M). These devices are physically transported 460, and the information is handed over 470 to a recipient device (R1, R2).

Method 400 can be triggered by detecting that the operation of the communication network exceeds a threshold condition so that notifying 420 and sending 440 are performed by communication channels (cf. ad-hoc connection 305) that are independent from the communication network. The method can be applied to mobile devices (1, 2, 3, 4, 5, 6) inside a disaster area.

FIG. 5 is a close-up view of mobile devices 1, 2 and 4 to illustrate the method activity to classify the devices into devices with complementary movement state.

FIG. 5 shows the xy-coordinate system. But it is not required to determine the location (in view of the geographic area). It is sufficient to monitor the relative change of the location of the device. This can be accomplished by the mentioned movement sensor (e.g., accelerometer) of the device.

In the example, the relative change of the location (dislocation) of the device (and hence the person) can be calculated by looking at delta values during a given measurement time interval (t1A to t1 B). For example, the distance can be calculated by applying the well-know Pythagoras' theorem to the delta values.

Dislocation 501 of device 1 exceeds a predetermined threshold so that the device is classified as "moving" (state M). In the example, person 1 is moving into a direction. (Optionally, the direction could be taken into account, if the person is moving into the escape direction or not)

Dislocation 502 of device 2 is below a predetermined threshold so that the device is classified as not moving (or static, state S). Person 2 is moving, but seems to run around without actually escaping. The dislocation counts, but not the distance that the person was running around.

Dislocation 504 is essentially not available. Person 4 using the device 4 might be severely injured (or even dead) so that he/she can not move.

FIG. 5 also illustrates that - optionally - the speed of the device (dislocation over time interval) can be calculated. The speed can be used for other purposes as well, for example, as a device selection criterion (cf. FIG. 7).

The relative change of location can also be determined otherwise, for example, by evaluating the strengths of radio signal in the communication between devices; the signal strength is related to the distance between devices.

FIG. 6 is a collection of block diagrams of mobile devices to illustrate implementations of a method activity to notify the movement state from a device in a centre to other devices;

From left to right, the figure shows devices 610, 620 and 630 in the centre, and shows a number of N other devices 6x1, 6x2, 6x3 and 6x4 around. But the arrangement by location does not matter. In the example, N = 4, but it can be expected that notifications go to much more devices (e.g., N=1000 or even higher)

In a first implementation - broadcast 1 to N - device 610 substantially simultaneously notifies devices 611, 612, 613, and 614. That is illustrated by arrows outgoing device 610 at time point t2.

In a second implementation - unicast 1 to 1 - device 620 consecutively notifies the other devices, it notifies device 621 at t21, then notifies device 622 at t22, then notifies device 623 at t23, and then notifies device 624 at t24.

In a third implementation - multicast 1 to a group - device 630 notifies device 631 and 632 at t21 (as a first group), then notifies devices 633 and 634 at t22 (as a second group).

It does not matter which movement state is being notified (cf. FIG. 3A with M; FIG. 3B with S), so that the devices show in the centre can be moving (M) or non-moving (S) devices.

FIG. 7 is a portion of the geographic area with devices 701, 702, 703 and 704 (persons 1, 2, 4 and 4) to illustrate the method activity to select devices for communicating data between the devices.

For selecting, a mobility index could be used that expresses the probability (or likelihood) of conveying the data to the destination. In other words, the probability of the next method activities (receiving, transmitting, handing-over) can be considered as selection criteria.

The SPEED of the device (that is moving, state M) can be important, so there is a preference to hand over data to a moving person who moves sufficiently fast.

The SIGNAL STRENGTH of the ad-hoc communication between devices can be considered as well. The signal strength depends on a variety of factors, such as the distance between the devices, or on obstacles like walls between the devices.

BATTERY status of the moving device can be considered as well. Devices with a battery that is almost empty are not likely to hand-over the data.

In the example, looking at devices 701 and 704, device 701 moves with medium speed, the signals between them have medium strength, and the battery of device 701 has a status HIGH. That qualifies device 701 to be the carrier of information from device 704.

In the example, looking at devices 704 and 703, device 703 moves with high speed, the signals between them have high strength, and the battery of device 703 has a status MEDIUM. That qualifies device 703 to be the carrier of information from device 704. (Device 704 has selected 2 devices 701 and 703.)

In the example, looking at devices 703 and 702, there is only LOW signal strength so that a selection is denied. Hence, device 703 is not the carrier for information from device 702. There is a low probability that the first step - sending - fails.

In the example, looking at devices 701 and 702, a selection is possible, with medium speed of device 701, but HIGH signal and battery values.

More in detail, high speed does not necessarily correspond to the high probability of sending the information successfully. For example, when using WLAN as the ad-hoc connection, high speed (e.g., more than 6 metres per second) might lead to data loss; but medium speed (3-5 m/s) qualifies the device as a candidate to receive data.

FIG. 8 is a block diagram of devices to illustrate the method activity to hand over data from the devices to a data destination.

Device 803 (person 3) is illustrated as the example to hand-over the data (e.g., location data for person 2, x2, y2). There might be a variety of options available. Device 803 can hand over data to different targets (810, 812, 813).

For example, rescue person 810 (cf. R1 in FIG. 1) also uses a mobile device, establishes a connection to device 810 and obtains the data.

For example, device 803 is collected by a rescue person, and the rescue person sends the data to a control centre for further use, such as for the coordination of rescue operations. Control centre 813 can be, for example, the emergency control room run by police.

For example, device 803 can reach an area in that a communication infrastructure is operating normally (as BS 112, cell 102 in FIG. 1). In this case, person 3 has escaped the disaster area. Device 803 establishes a communication via base station 812 and the data is forwarded via existing networks.

There is a distinction between carrier 830 (that further transmits information) and destination 840 (that actually uses the information). Respondent 810 and control centre 813 have aspects of both: they process the information and go out rescuing. BS 812 has more the aspect of being carrier 830, but infrastructures could be arranged such that rescue-relevant information arriving through "data mules" from disaster areas are automatically forwarded to authorities that organize help.

Operation patterns of device and targets can be push and/or pull. Persons of skill in the art can select a suitable pattern to ensure that the data is handed over.

Having explained the figures, the description continues with a discussion of further aspects.

The approach had been described by scenarios with devices that are carried by persons. The principles apply for other carriers as well: vehicles, or animals (e.g., rescue dogs). Some persons (and devices) can be used in the function of relays, so that information is sequentially carried by many devices (multi-hop, in a chain).

Rescue-relevant information can be distributed over multiple devices, thus increasing the probability that information reaches the destination.

Data could be compressed to save bandwidth. Data could also be filtered before sending, so that non-relevant data is not transmitted, or transmitted at a later point in time.

The movement state of a device can change, for example, when an escaping person gets injured and stops running. In such cases, the device is starting to notify the new state (S), and the rescue-relevant information is updated (e.g., by the location where the person stopped). In a further example, persons can change roles: the moving person who stops running hands over information to others, non-moving persons can start moving and can take over information.

The method is considered to be in a constant repetition loop, so that, for example, a moving device continues to notify other devices, and can receive further information while moving.

Selecting could be simplified to select all available devices.

The location information is an example for rescue-relevant information. Location data can be communicated - as mentioned - by xy-coordinates (from GPS modules, or Galileo modules), or by references to a WLAN (that is known to the rescuers. Location data can be a reference to a particular room in a building (e.g., wing, floor, room number), a particular address for a building (e.g., street, or block). Location data can include altitude information (e.g., a floor number in buildings, or the altitude in mountainous areas).

Location data is usually in the magnitude of a few byte (or kilobytes, including data headers etc.). Due to selection, data load over the ad-hoc connections (in the ad-hoc network) is minimized. That could also allow to communicate data that need more bandwidth (or more communication time), such as pictures (of a location in the disaster area), voice messages, movie or the like taken by the non-moving person (who waits for help) or by a moving person.

WLAN (according to IEEE 802.11, also called "Wi-Fi") allows ad-hoc connections between devices, and also allows connections using access points. The connections between the devices could also be established via the access points (in case the points are still operating).

Embodiments of the invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device, for execution by, or to control the operation of, data processing apparatus, e.g., a programmable processor, a computer, or multiple computers. A computer program, can be written in any form of programming language, including compiled or interpreted languages, and it can be deployed in any form, including as a standalone program or as a module, component, subroutine, or other unit suitable for use in a computing environment. A computer program can be deployed to be executed on one computer or on multiple computers at one site (e.g., in the vehicle) or distributed across multiple sites (e.g. central computer) and interconnected by a communication network. The methods can all be executed by corresponding computer products on the respective devices.

Method steps of the invention can be performed by one or more programmable processors executing a computer program to perform functions of the invention by operating on input data and generating output. Method steps can also be performed by, and an apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Such storage devices may also be provisioned on demand and be accessible through the Internet (Cloud Computing). Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a liquid crystal display (LCD) monitor, for displaying information to the user and an input device such as a keyboard, touchscreen or touchpad, a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Mobile devices can be, for example, smart phones, tablet PCs or any other handheld computing device. The components of the system can be interconnected by any form or medium of digital data communication, e.g., a communication network. Examples of communication networks include a local area network (LAN) and a wide area network (WAN), e.g., the Internet or wireless LAN or telecommunication networks. The computing system can include clients and servers. A client and server are generally remote from each other and typically interact through a communication network. The relationship of client and server arises by virtue of computer programs running on the respective computers and having a client-server relationship to each other.

## Claims

1. Computer-implemented method (400) for operating a mobile device (301), comprising:
observing (410) the physical movement of the mobile device (301) to classify the mobile device (301) to have an observed movement state (M) relating to a change in the location of the mobile device over time;
notifying (420) the observed movement state (M) to other mobile devices (302);
in response to the notification, receiving (450) location information (x2, y2) from at least one other mobile device (302) that has a movement state (S) that is complementary to the observed movement state (M); and
upon arrival of the mobile device (301) in a destination area (240, 840), handing over (470) the location information (x2, y2) to a recipient (R1, R2, 812, 813, 810);
wherein the mobile device (301) is configured to operate in a communication network and the method (400) is triggered by detecting that the operation of the communication network exceeds a threshold condition and wherein said notifying (420) and receiving (450) are performed by communication channels (305) that are independent from the communication network (111/101).

2. Method (400) according to claim 1, wherein the threshold condition includes that the number of mobile devices attempting to connect to a base station (111) exceeds a maximum number of devices that can be allocated to this base station (111).

3. Method (400) according to any of claims 1 to 2, wherein the observed movement state (M) is a directional movement with a speed above a predefined threshold (delta x, delta y, t1 A, t1 B) and the complementary movement state (S) is a movement with a speed below the predefined threshold (delta x, delta y, t1 A, t1 B).

4. Method (400) according to claim 1, further comprising selecting (430) a particular other device (302) having a movement state (S) that is complementary to the observed movement state (M), wherein selecting (430) is performed according to the probability of the device with the observed movement state to hand over (470) the location information (x2, y2) at the destination area (240, 840).

5. Method (400) according to claim 4, wherein the probability is derived from (i) a speed of the device with the observed movement state (M), (ii) a radio signal strength in communication activities between devices, or (iii) a battery status of the device with the observed movement state (M)

6. Computer-program product that when loaded into a memory of a mobile computer and being executed by at least one processor of the computer - performs the steps of the computer-implemented method according to any of claims 1 to 5.

7. Mobile device (301), comprising: an observer module (311) configured to observe the physical movement of the mobile device (301) to classify the mobile device (301) to have an observed movement state (M) that is a first movement state (M) or a complementary second movement state (S), the first movement state (M) relating to a change of the location (delta x, delta y) of the mobile device (301) over time (t1A, t1B); a notifier module (321) configured to notify the observed movement state (M) to other mobile devices (302); a selector module (331) configured to select at least one other device (302) having a movement state (S) that is complementary to the observed movement state (M); a sender module (341) configured to, in case the other mobile device (302) has the second movement state (S), send (440) location information (x2, y2) to the other mobile device; a receiver module (351) configured to, in case the mobile device (301) has the first movement state (M), receive (450) location information (x2, y2) from the other mobile device; and a hand-over module (371) configured to hand over (470) the location information (x2,y2) to a recipient (R1, R2, 812, 813, 810) after the mobile device has been physically transported (460) to a destination area (240, 840).

8. Mobile device (311) according to claim 7, wherein the modules are implemented by a computer-processor that accesses built-in components of the mobile device, the computer-processor accesses an accelerometer to provide the function of the observer module (311), accesses built-in device-to-device radio interfaces to provide the function of the sender (341) and receiver (351) modules.

9. Mobile device (311) according to claim 8, wherein the built-in device-to-device radio interface is one of a WLAN-interface and a Bluetooth interface.

## Patentansprüche

1. Rechnerimplementiertes Verfahren (400) für den Betrieb einer Mobilvorrichtung (301), umfassend:
Beobachten (410) der physischen Bewegung der Mobilvorrichtung (301) zur Klassifizierung eines beobachteten Bewegungszustands (M) der Mobilvorrichtung (301), der sich auf eine örtliche Veränderung der Mobilvorrichtung über Zeit bezieht;
Benachrichtigen (420) anderer Mobilvorrichtungen (302) über den beobachteten Bewegungszustand (M);
Empfangen (450) von Ortsinformationen (x2, y2) als Reaktion auf die Benachrichtigung von mindestens einer anderen Mobilvorrichtung (302), die einen Bewegungszustand (S) hat, der zu dem beobachteten Bewegungszustand (M) komplementär ist; und
Übergeben (470) der Ortsinformationen (x2, y2) an einen Empfänger (R1, R2, 812, 813, 810) bei Ankunft der Mobilvorrichtung (301) in einem Zielbereich (240, 840);
wobei die Mobilvorrichtung (301) für den Betrieb innerhalb eines Kommunikationsnetzwerks konfiguriert ist und das Verfahren (400) dadurch ausgelöst wird, dass der Betrieb des Kommunikationsnetzwerks eine Schwellenbedingung überschreitet, und wobei das Benachrichtigen (420) und Empfangen (450) mittels Kommunikationskanälen (305) durchgeführt wird, die von dem Kommunikationsnetzwerk (111/101) unabhängig sind.

2. Verfahren (400) nach Anspruch 1, wobei der Schwellenbedingung einschließt, dass die Anzahl der Mobilvorrichtungen, die versuchen, eine Verbindung zu einer Basisstation (111) aufzubauen, die Höchstanzahl der Vorrichtungen, die dieser Basisstation (111) zugerechnet werden können, überschreitet.

3. Verfahren (400) nach Anspruch 1 oder 2, wobei der beobachtete Bewegungszustand (M) eine Richtungsbewegung mit einer Geschwindigkeit über einer vordefinierten Schwelle ist (Delta x, Delta y, t1A, t1B), und wobei der komplementäre Bewegungszustand (S) eine Bewegung mit einer Geschwindigkeit unter der vordefinierten Schwelle (Delta x, Delta y, t1A, t1 B) ist.

4. Verfahren (400) nach Anspruch 1, ferner umfassend das Auswählen (430) einer bestimmten anderen Vorrichtung (302) mit einem Bewegungszustand (S), der zu dem beobachteten Bewegungszustand (M) komplementär ist, wobei das Auswählen (430) gemäß der Wahrscheinlichkeit durchgeführt wird, mit der die Vorrichtung mit dem beobachtetem Bewegungsstatus das Übergeben (470) der Ortsinformationen (x2, y2) im Zielbereich (240, 840) vornimmt.

5. Verfahren (400) nach Anspruch 4, wobei die Wahrscheinlichkeit von (i) einer Geschwindigkeit der Vorrichtung mit dem beobachteten Bewegungszustand (M); (ii) einer Radiosignalstärke bei der Kommunikation zwischen Vorrichtungen; oder (iii) einem Batteriestatus der Vorrichtung mit dem beobachteten Bewegungsstatus (M) abgeleitet wird.

6. Rechnerprogrammprodukt, das die Schritte des rechnerimplementierten Verfahrens nach einem der Ansprüche 1 bis 5 ausführt, sofern dasselbe in einen Speicher eines Mobilrechners geladen wurde und von mindestens einem Prozessor des Rechners ausgeführt wird.

7. Mobilvorrichtung (301), umfassend ein Beobachtungsmodul (311), das zur Beobachtung der physischen Bewegung der Mobilvorrichtung (301) konfiguriert ist, um die Mobilvorrichtung (301) danach zu klassifizieren, dass dieselbe einen beobachteten Bewegungszustand (M) hat, der ein erster Bewegungszustand (M) ist, oder einen komplementären zweiten Bewegungszustand (S), wobei sich der erste Bewegungszustand (M) auf eine örtliche Änderung (Delta x, Delta y) der Mobilvorrichtung (301) über Zeit (t1 A, t1 B) bezieht; ein Benachrichtigungsmodul (321), das dazu konfiguriert ist, um andere Mobilvorrichtungen (302) über den beobachteten Bewegungszustand (M) zu benachrichtigen; ein Auswahlmodul (331), das dazu konfiguriert ist, um mindestens eine andere Vorrichtung (302) mit einem Bewegungszustand (S) auszuwählen, der komplementär zu dem beobachteten Bewegungszustand (M) ist; ein Sendermodul (341), das dazu konfiguriert ist, Ortsinformationen (x2, y2) an die andere Vorrichtung zu senden (440), sofern die andere Mobilvorrichtung (302) den zweiten Bewegungszustand (S) hat; ein Empfangsmodul (351), das dazu konfiguriert ist, Ortsinformationen (x2, y2) von der anderen Mobilvorrichtung zu empfangen (450), sofern die Mobilvorrichtung (301) den ersten Bewegungszustand (M) hat; und ein Übergabemodul (371), das dazu konfiguriert ist, die Ortsinformationen (x2, y2) an einen Empfänger (R1, R2, 812, 813, 810) zu übergeben (470), nachdem die Mobilvorrichtung physisch in einen Zielbereich (240, 840) gebracht (460) wurde.

8. Mobilvorrichtung (311) nach Anspruch 7, wobei die Module von einem Rechnerprozessor implementiert werden, der auf integrierte Komponenten der Mobilvorrichtung zugreift, und der Rechnerprozessor greift auf einen Beschleunigungsmesser zu, um die Funktionalität des Beobachtermoduls (311) bereitzustellen und auf die integrierten Schnittstellen von einer Vorrichtung zur anderen zu, um die Funktionalität des Sender- (341) und Empfängermoduls (351) bereitzustellen.

9. Mobilvorrichtung (311) nach Anspruch 8, wobei die integrierte Schnittstelle von einer Vorrichtung zur anderen eine von einer WLAN- oder Bluetooth-Schnittstelle ist.

## Revendications

1. Procédé mis en oeuvre par ordinateur (400) pour faire fonctionner un dispositif mobile (301), comprenant :
l'observation (410) du mouvement physique du dispositif mobile (301) pour classer le dispositif mobile (301) de façon à avoir un état de mouvement observé (M) se rapportant à un changement de la localisation du dispositif mobile au fil du temps ;
la notification (420) de l'état de mouvement observé (M) à d'autres dispositifs mobiles (302) ;
en réponse à la notification, la réception (450) d'informations de localisation (x2, y2) provenant d'au moins un autre dispositif mobile (302) qui possède un état de mouvement (S) qui est complémentaire de l'état de mouvement observé (M) ; et
à l'arrivée du dispositif mobile (301) dans une zone de destination (240, 840), la remise (470) des informations de localisation (x2, y2) à un destinataire (R1, R2, 812, 813, 810) ;
dans lequel le dispositif mobile (301) est configuré pour fonctionner dans un réseau de communication et le procédé (400) est déclenché en détectant que le fonctionnement du réseau de communication dépasse une condition seuil, et dans lequel lesdites notification (420) et réception (450) sont exécutées par des canaux de communication (305) qui sont indépendants du réseau de communication (111/101).

2. Procédé (400) selon la revendication 1, dans lequel la condition seuil comprend le fait que le nombre de dispositifs mobiles tentant de se connecter à une station de base (111) dépasse un nombre maximum de dispositifs qui peuvent être alloués à cette station de base (111).

3. Procédé (400) selon l'une quelconque des revendications 1 à 2, dans lequel l'état de mouvement observé (M) est un mouvement directionnel avec une vitesse supérieure à un seuil prédéfini (delta x, delta y, t1 A, t1 B) et l'état de mouvement complémentaire (S) est un mouvement avec une vitesse inférieure au seuil prédéfini (delta x, delta y, t1 A, t1 B).

4. Procédé (400) selon la revendication 1, comprenant en outre la sélection (430) d'un autre dispositif particulier (302) possédant un état de mouvement (S) qui est complémentaire de l'état de mouvement observé (M), dans lequel la sélection (430) est effectuée selon la probabilité du dispositif avec l'état de mouvement observé de remettre (470) les informations de localisation (x2, y2) au niveau de la zone de destination (240, 840).

5. Procédé (400) selon la revendication 4, dans lequel la probabilité est dérivée (i) d'une vitesse du dispositif ayant l'état de mouvement observé (M), (ii) d'une force de signal radio pour les activités de communication entre dispositifs, ou (iii) d'un état de batterie du dispositif ayant l'état de mouvement observé (M)

6. Produit de programme informatique qui, lorsqu'il est chargé dans une mémoire d'un ordinateur mobile et qu'il est exécuté par au moins un processeur de l'ordinateur, exécute les étapes du procédé mis en oeuvre par ordinateur selon l'une quelconque des revendications 1 à 5.

7. Dispositif mobile (301), comprenant: un module observateur (311) configuré pour observer le mouvement physique du dispositif mobile (301) pour classer le dispositif mobile (301) de façon à avoir un état de mouvement observé (M) qui est un premier état de mouvement (M) ou un second état de mouvement complémentaire (S), le premier état de mouvement (M) se rapportant à un changement de la localisation (delta x, delta y) du dispositif mobile (301) au fil du temps (t1 A, t1 B) ; un module de notification (321) configuré pour notifier d'autres dispositifs mobiles (302) de l'état de mouvement observé (M) ; un module sélecteur (331) configuré pour sélectionner au moins un autre dispositif (302) possédant un état de mouvement (S) qui est complémentaire de l'état de mouvement observé (M) ; un module expéditeur (341) configuré, au cas où l'autre dispositif mobile (302) posséderait le second état de mouvement (S), pour envoyer (440) des informations de localisation (x2, y2) à l'autre dispositif mobile ; un module récepteur (351) configuré, au cas où le dispositif mobile (301) posséderait le premier état de mouvement (M), pour recevoir (450) des informations de localisation (x2, y2) de l'autre dispositif mobile ; et un module de remise (371) configuré pour remettre (470) les informations de localisation (x2,y2) à un destinataire (R1, R2, 812, 813, 810) après que le dispositif mobile a été physiquement transporté (460) vers une zone de destination (240, 840).

8. Dispositif mobile (311) selon la revendication 7, dans lequel les modules sont mis en oeuvre par un processeur d'ordinateur qui accède aux composants intégrés du dispositif mobile, le processeur d'ordinateur accède à un accéléromètre pour fournir la fonction du module observateur (311), accède à des interfaces radio intégrées de dispositif à dispositif pour fournir la fonction des modules expéditeur (341) et récepteur (351).

9. Dispositif mobile (311) selon la revendication 8, dans lequel l'interface radio intégrée de dispositif à dispositif est une interface parmi une interface WLAN et une interface Bluetooth.
